# EUROPEAN PATENT APPLICATION

(11) **EP 4 249 186 A1**
(43) Date of publication of application: **27.09.2023**
(21) Application number: 21894229.0
(22) Date of filing: 09.03.2021
(51) Int. Cl.: B25J 9/22, B25J 19/06, G05B 19/19, G05B 19/42

(54) **SELF-TRAVELING TRANSPORT DEVICE, CONTROL METHOD FOR SELF-TRAVELING TRANSPORT DEVICE, AND INSPECTION PROGRAM**

(30) Priority: 19.11.2020 JP 2020192617
(71) Applicant: OMRON Corporation, Kyoto 600-8530 (JP)
(72) Inventor: OKADA, Tomohiro, Kyoto-shi, Kyoto 600-8530 (JP); INOUE, Takahiro, Kyoto-shi, Kyoto 600-8530 (JP)
(74) Representative: Becker, Eberhard
(86) International application number: PCT/JP2021/009291
(87) International publication number: WO 2022/107352

(57) **Abstract**

In a self-traveling transport device according to the present invention, toppling over of the self-traveling transport device due to the movement of a robot arm is prevented. The self-traveling transport device (1) is provided with a traveling robot (3) and a robot arm (4) and performs a control so as to stop the robot arm (4) when the movement of the robot arm (4) is about to deviate from an allowable movement range set on the basis of a movement range file (21) in which is registered the movement range of the robot arm (4), which is capable of standing up.

## Description

### Technical Field

The present invention relates to a self-traveling transport device provided with a robot arm, a control method for the self-traveling transport device, and an inspection program.

### Related Art

There is known a self-traveling transport device provided with a robot arm and used in a factory, a warehouse or the like. Such a self-traveling transport device has a configuration in which an articulated robot arm is mounted on a traveling robot also called an automated guided vehicle (AGV). By automatically performing a picking or placing operation by the robot arm and a movement by the traveling robot, unmanned transportation of an object to be transported is made possible.

### Prior-Art Documents

### Patent Documents

Patent Document 1: Japanese Translation of PCT International Application Publication No. 2019-519097

### SUMMARY OF THE INVENTION

### Problems to Be Solved by the Invention

The robot arm is heavy and its center of gravity changes with the position and posture of the robot arm. In order to avoid toppling over of the self-traveling transport device, a configuration was necessary which allows the traveling robot to have sufficiently large base area relative to the robot arm so that an unstable state is not reached no matter what position and posture the robot arm is in. However, if the base area of the traveling robot is increased, a large travel area needs to be secured, which may cause a decrease in area efficiency or work efficiency of the factory, warehouse or the like. Alternatively, since the weight of the robot arm is limited, limitations on weight capacity or work content may become severe.

An object of one aspect of the present invention is to prevent a self-traveling transport device from toppling over without excessively increasing base area of a traveling robot relative to a robot arm.

### Means for Solving the Problems

In order to solve the above problems, a self-traveling transport device according to one aspect of the present invention is a self-traveling transport device including: a traveling robot; a robot arm, mounted on the traveling robot; a robot arm controller, controlling the robot arm; an arm movement monitoring part, monitoring a movement of the robot arm; and a storage part, storing a movement range file. The movement range file is a file in which is registered a movement range of the robot arm in which the self-traveling transport device is capable of standing. During formulation of a route plan for the robot arm, in the case where the movement of the robot arm is about to deviate from an allowable movement range, the arm movement monitoring part notifies the robot arm controller and causes the robot arm controller to control the movement of the robot arm to stop, in which the allowable movement range is defined based on the movement range of the robot arm which is registered in the movement range file and in which the self-traveling transport device is capable of standing.

A control method for a self-traveling transport device according to another aspect is a control method for a self-traveling transport device including a traveling robot and a robot arm mounted on the traveling robot. The control method for a self-traveling transport device includes the following. During formulation of a route plan for the robot arm, in the case where a movement of the robot arm is about to deviate from an allowable movement range, the movement of the robot arm is controlled to stop, in which the allowable movement range is defined based on a pre-calculated movement range of the robot arm in which the self-traveling transport device is capable of standing.

A self-traveling transport device according to each aspect of the present invention may be realized by a computer. In this case, a robot arm control program, an arm movement monitoring program and a notification program of the self-traveling transport device, which realize the self-traveling transport device on the computer by causing the computer to operate as each part (software element) included in the self-traveling transport device, as well as a computer-readable recording medium storing the programs, also fall within the scope of the present invention.

### Effects of the Invention

According to one aspect of the present invention, a posture of a robot arm can be taken only within the allowable movement range in which the self-traveling transport device is capable of standing, and the self-traveling transport device can be prevented from toppling over.

### BRIEF DESCRIPTION OF THE DRAWINGS

FIG. 1 is a block diagram illustrating a configuration of a main part of a self-traveling transport device according to Embodiment 1.
FIG. 2 is a perspective view illustrating an appearance of the self-traveling transport device according to Embodiment 1 in a certain posture.
FIG. 3 is a flowchart illustrating a process of creating a movement range file 21 of the self-traveling transport device according to Embodiment 1.
FIG. 4 is a flowchart illustrating an operation in a teaching mode of the self-traveling transport device according to Embodiment 1.
FIG. 5 is a perspective view illustrating the appearance of the self-traveling transport device according to Embodiment 1 in another posture.
FIG. 6 is a perspective view illustrating the appearance of the self-traveling transport device according to Embodiment 1 in still another posture.
FIG. 7 is a flowchart illustrating an operation in an execution mode of the self-traveling transport device according to Embodiment 1.
FIG. 8 is a block diagram illustrating a configuration of a main part of an inspection program according to Embodiment 2.

### DESCRIPTION OF THE EMBODIMENTS

### [Embodiment 1]

An embodiment (hereinafter also written as "the present embodiment") according to one aspect of the present invention is described below based on the drawings. The same or equivalent portions in the drawings are denoted by the same reference numerals, and descriptions thereof are not repeated.

### §1 Application Example

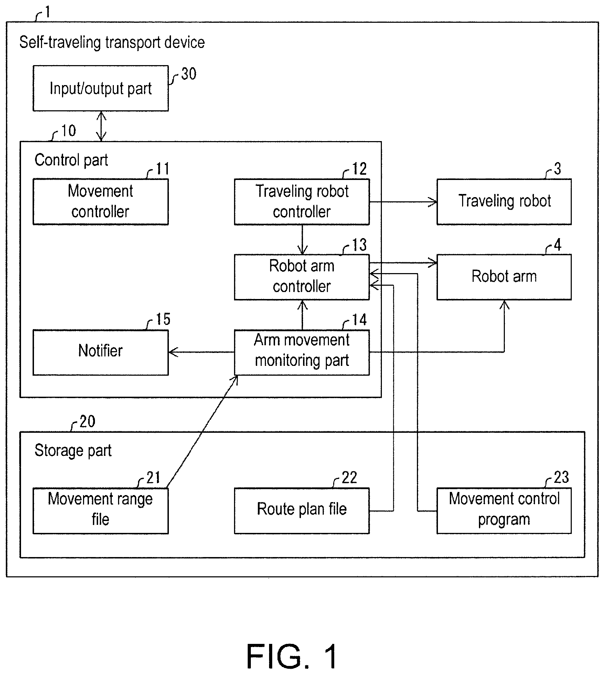

FIG. 1 is a block diagram illustrating a configuration of a main part of a self-traveling transport device 1 according to Embodiment 1. A self-traveling transport device 1 includes a traveling robot 3 and a robot arm 4 mounted on the traveling robot 3.

Furthermore, the self-traveling transport device 1 includes a robot arm controller 13 controlling the robot arm 4, an arm movement monitoring part 14 monitoring a movement of the robot arm 4, and a storage part 20 storing a movement range file. The movement range file is a file in which is registered a movement range of the robot arm 4 in which the self-traveling transport device 1 is capable of standing.

The arm movement monitoring part 14 operates as follows during formulation of a route plan for the robot arm 4. In the case where the movement of the robot arm 4 is about to deviate from an allowable movement range defined based on the movement range of the robot arm 4 which is registered in the movement range file and in which the self-traveling transport device 1 is capable of standing, the arm movement monitoring part 14 notifies the robot arm controller 13. Then, the arm movement monitoring part 14 causes the robot arm controller 13 to control the movement of the robot arm 4 to stop.

In the self-traveling transport device according to an application example, by stopping the movement of the robot arm 4 in the case where the robot arm 4 is about to deviate from the allowable movement range during formulation of a route plan for the robot arm 4, toppling over of the self-traveling transport device 1 can be prevented from occurring. Accordingly, when the self-traveling transport device 1 actually performs work, a movement that may make the self-traveling transport device 1 topple over can be prevented from being executed.

### §2 Configuration Example

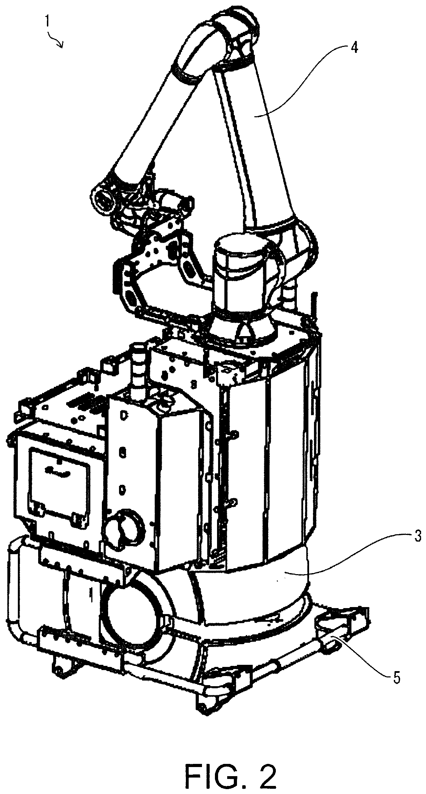

A relatively specific configuration example of the self-traveling transport device 1 is described below with reference to FIG. 1 and FIG. 2.

### (Overall Configuration of Self-traveling Transport Device 1)

FIG. 2 is a perspective view illustrating an appearance of the self-traveling transport device 1 according to Embodiment 1 in a certain posture. The self-traveling transport device 1 includes the traveling robot 3, the robot arm 4, a cart 5, a control part 10, the storage part 20, and an input/output part 30. The traveling robot 3 is an AGV that travels on a two-dimensional plane based on an instruction from a transport system server being a host system. The robot arm 4 is a manipulator with multiple degrees of freedom fixed to an upper part of the traveling robot 3.

The cart 5 is a toppling prevention member provided on an outer periphery of the traveling robot 3. If a large cart 5 is used to effectively increase the base area of the traveling robot 3, the possibility of the self-traveling transport device 1 toppling over due to the posture and movement of the robot arm 4 can be reduced. In the present embodiment, the self-traveling transport device 1 may not include the cart 5. In order to save floor space in a factory or a warehouse, it is desirable that the cart 5 be not present or be as small as possible.

### (Configuration of Storage Part 20)

The storage part 20 stores a parameter and a control program used in control of the self-traveling transport device 1. The storage part 20 includes a movement range file 21, a route plan file 22, and a movement control program 23.

The movement range file 21 is a file used by the control part 10, in which is registered a movement range of a robot arm in which the self-traveling transport device 1 is able to operate without toppling over in a posture and movement of the robot arm 4.

The movement range is obtained by a simulator by calculating conditions for toppling over in various postures and movements of the robot arm 4, including the presence or absence of a transported object. That is, it can be said that the movement range is a range indicating a limit within which the robot arm 4 is capable of standing.

The allowable movement range is a range of the posture and movement of the robot arm 4, in which a safety factor provided by a human with respect to the movement range is taken into account. That is, the allowable movement range is a range which is dynamically generated from the movement range and the safety factor and in which the robot arm 4 may actually perform a movement. In actual control of the robot arm 4 and teaching in route planning or the like, whether the self-traveling transport device 1 topples over is determined using the allowable movement range.

For the safety factor of the allowable movement range, a different value may be used for each situation of the movement. For example, compared to the case where the traveling robot is stopped, the safety factor may be set higher and the allowable movement range may be narrower in the case where the traveling robot is operating.

The route plan file 22 is a file in which route plans for the robot arm 4 formulated by the control part 10 are summarized. The route plan file 22 may or may not be saved in the storage part 20.

The movement control program 23 is a program in which an operator defines a movement of the robot arm 4.

### (Configuration of Control Part 10)

The control part 10 controls each part of the self-traveling transport device 1 in an integrated manner. The control part 10 includes a movement controller 11, a traveling robot controller 12, the robot arm controller 13, the arm movement monitoring part 14, and a notifier 15.

The self-traveling transport device 1 has three operation modes: a teaching mode, an execution mode, and a normal mode. The movement controller 11 operates each functional block according to these modes. An operation from the operator is received by the input/output part 30, and the movement controller 11 switches between the modes.

The teaching mode is a mode in which the operator teaches a movement of the robot arm 4. That is, in the teaching mode, the operator directly operates the robot arm 4 or operates the robot arm 4 by using a console for manual operation, registers a trajectory along which the robot arm 4 has passed, and formulates a route plan. The formulated route plan is stored in a taught route plan file. The taught route plan file is the route plan file 22. During the teaching mode, if the robot arm 4 deviates from the allowable movement range and the self-traveling transport device 1 is in danger of toppling over, teaching is stopped, and the route plan that has already been executed is canceled.

The execution mode is an operation mode in which the operator causes the robot arm 4 to perform a movement based on the movement control program 23 that has been programmed in advance, and a route plan is formulated while it is confirmed whether the robot arm 4 performs the movement safely. The operator selects the movement control program 23 to be executed and causes the robot arm 4 to execute the movement. The robot arm 4, while executing the movement, formulates a trajectory along which it has passed as a route plan. The formulated route plan is stored in a confirmed route plan file. The confirmed route plan file is the route plan file 22. At this time, if the robot arm 4 deviates from the allowable movement range and there is a danger of toppling over, the movement is stopped, and the route plan that has already been executed is canceled.

During the execution mode, the route plan file 22 taught in the teaching mode may be used. By the execution mode, the operator determines whether the movement control program 23 is operating normally and unmanned operation is possible.

The normal mode is an operation mode in which the robot arm 4 performs a movement in accordance with the route plan file 22 that is formulated in advance. That is, the normal mode is an operation mode in which an article is actually picked or placed and transported in a warehouse, a factory or the like according to the route plan file 22. By the teaching mode or the execution mode, the route plan file 22 is confirmed in advance that no deviation from the allowable movement range occurs and is safe. Thus, in the normal mode, monitoring of the robot arm 4 by the arm movement monitoring part 14 is basically disabled.

In the normal mode, in principle, the robot arm 4 does not perform a movement according to the movement control program 23. The reason is that, since the movement control program 23 does not actually verify a movement using the self-traveling transport device 1, there is a risk that the robot arm 4 may deviate from the allowable movement range and topple over.

The traveling robot controller 12 controls the traveling robot 3 to move the self-traveling transport device 1 to a predetermined position in accordance with the instruction from the transport system server as the host. In the normal mode, after completing the movement by the traveling robot, the traveling robot controller 12 transfers the operation to the robot arm controller 13.

The robot arm controller 13 controls the posture and movement of the robot arm 4. The robot arm controller 13 is able to receive an instruction on other functions of the control part and stop the movement of the robot arm 4.

The robot arm controller 13 controls the robot arm 4 in accordance with the route plan file 22 in the normal mode. Alternatively, the robot arm controller 13 determines and controls the movement of the robot arm 4 by the teaching by the operator in the teaching mode or by the movement control program 23 in the execution mode.

In the teaching mode or the execution mode, the robot arm controller 13 stores a trajectory of an actual movement of the robot arm 4 as a taught route plan file or a confirmed route plan file.

The arm movement monitoring part 14 monitors the posture and movement of the robot arm 4, or monitors whether a route plan formulated in the route plan file 22 deviates from the allowable movement range stored in the movement range file 21. In the case where the movement of the robot arm 4 has deviated from the allowable movement range, the arm movement monitoring part 14 notifies the robot arm controller 13 to stop the movement of the robot arm 4. At the same time, the arm movement monitoring part 14 notifies the notifier 15 that the robot arm 4 has deviated from the allowable movement range.

The notifier 15 receives an input notification that the robot arm 4 has deviated from the allowable movement range, and issues a warning to the operator. Examples of a warning method include a method using a buzzer, a display or the like as well as a method of turning off a servo of the robot arm 4 to prevent the robot arm 4 from operating outside the allowable movement range.

### (Configuration of Input/output Part 30)

The input/output part 30 inputs and outputs various information between the operator and the self-traveling transport device 1. For example, the input/output part 30 may receive from the operator an input of setting of the safety factor or an input of a change of the operation mode with respect to the self-traveling transport device 1, or the input/output part 30 may notify the operator of a warning from the self-traveling transport device 1 through the notifier 15. The input/output part 30 may also be used in the case of communicating with the transport system server as the host and controlling the self-traveling transport device 1.

### §3 Operation Example

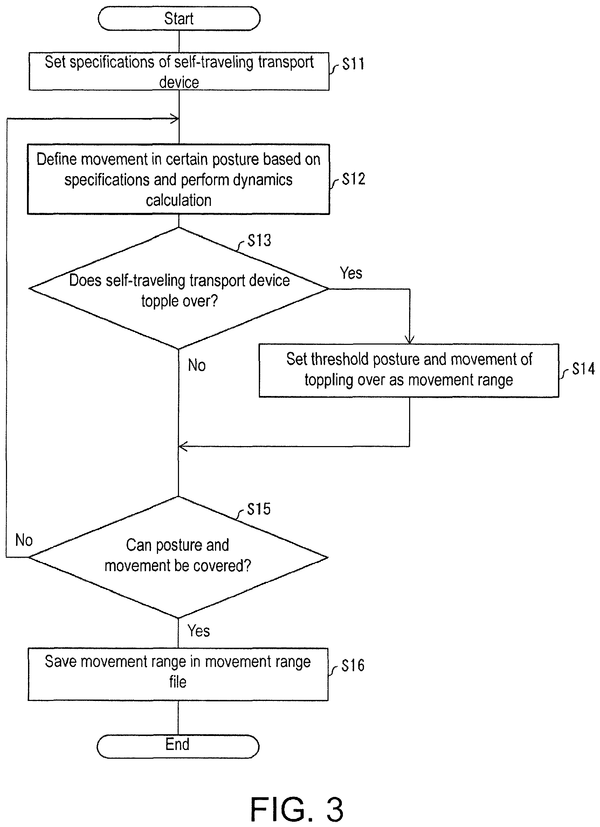

A relatively operation example of the self-traveling transport device 1 is described below with reference to FIG. 3 to FIG. 7.

### (Creation of Movement Range File 21)

FIG. 3 is a flowchart illustrating a process of creating the movement range file 21 of the self-traveling transport device 1 according to Embodiment 1. The movement range file 21 is created by the operator operating an external dynamics simulator without using the self-traveling transport device 1.

Step S11: Specifications of the self-traveling transport device 1 are set in the dynamics simulator. The specifications include various data used in dynamics calculation of a mechanical dimension, a weight, an operation range of the robot arm 4, or the like.

Step S12: The dynamics simulator organizes postures that can be taken within the operation range of the robot arm 4, defines a movement in a certain posture, and performs the dynamics calculation. At this time, the certain posture refers to a posture obtained by defining a posture for discrete simulation from among a large number of postures that can be taken within the operation range of the robot arm 4, carrying out a simulation in a specific movement in the posture, and performing interpolation between postures and between movements as appropriate. The specific movement in the posture includes a plurality of movements that are discretely defined.

Step S13: It is determined whether the self-traveling transport device 1 topples over as a result of the simulation of step S12. If the result of determination is that the self-traveling transport device 1 topples over (Yes in step S13), the process proceeds to step S14. If the result of determination is that the self-traveling transport device 1 does not topple over (No in step S13), the process proceeds to step S15.

Step S14: Since the self-traveling transport device 1 topples over, the posture and the movement correspond to a threshold posture and movement of toppling over. Thus, a movement range is set just before the posture and the movement.

Step S15: It is confirmed whether a discretely defined posture and movement for simulation can be covered. If cannot be covered (No in S15), the process returns to step S12 and is continued in other postures and movements. If can be covered (Yes in S15), the process proceeds to step S16.

Step S16 : The movement range is saved in the movement range file 21. The saved movement range file 21 is copied to the storage part 20 of the self-traveling transport device 1 and used in determination of the allowable movement range in the self-traveling transport device 1.

### (Teaching Mode)

Next, specific operation examples of the self-traveling transport device 1 in the three operation modes are described. First, the teaching mode is described.

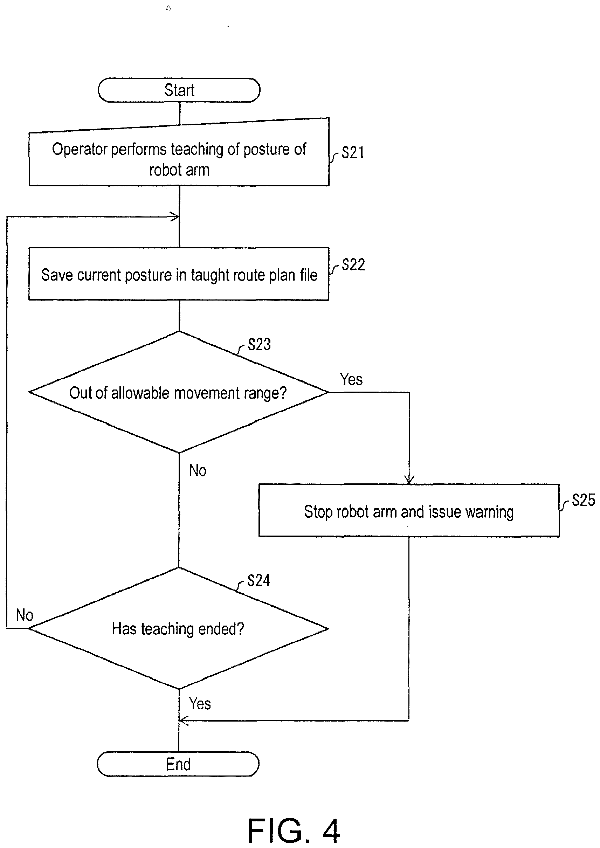

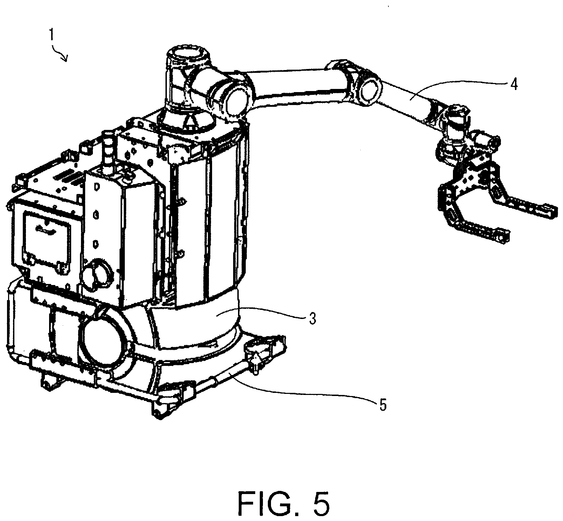

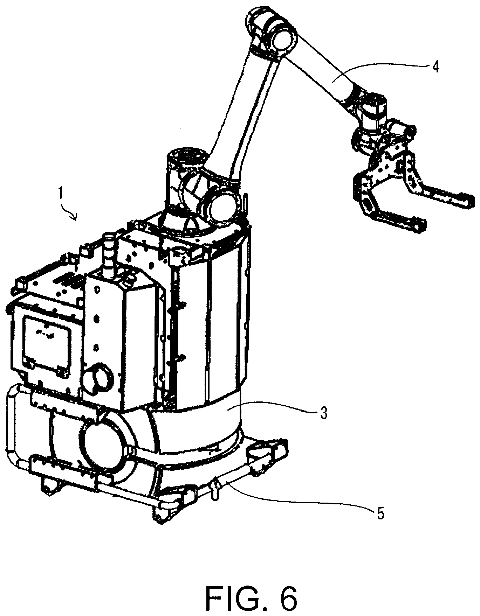

FIG. 4 is a flowchart illustrating an operation in the teaching mode of the self-traveling transport device 1 according to Embodiment 1. FIG. 5 is a perspective view illustrating the appearance of the self-traveling transport device 1 according to Embodiment 1 in another posture. FIG. 6 is a perspective view illustrating the appearance of the self-traveling transport device 1 according to Embodiment 1 in still another posture. Here, a case is described where the robot arm 4 performs a movement from the posture illustrated in FIG. 2 toward the posture illustrated in FIG. 5. The posture illustrated in FIG. 6 is a posture passed through in a process of changing from the posture illustrated in FIG. 2 to the posture illustrated in FIG. 5.

Step S21: The operator performs teaching of a posture of the robot arm 4. At this time, in order for the robot arm 4 to follow the operator's movement, the robot arm controller 13 performs control, and the operator actually directly operates the robot arm 4 and performs teaching. For example, the operator causes the robot arm 4 to perform a movement from the posture illustrated in FIG. 2 toward the posture illustrated in FIG. 5 through the posture illustrated in FIG. 6.

Step S22: The robot arm controller 13 saves the current posture of the robot arm 4 in the taught route plan file during teaching by the operator.

Step S23: The arm movement monitoring part 14 determines whether the current posture and movement of the robot arm 4 have deviated from the allowable movement range. If the robot arm 4 does not deviate from the allowable movement range (No in S23), the process proceeds to step S24. If the robot arm 4 deviates from the allowable movement range (Yes in S23), the process proceeds to step S25.

Step S24: The operator determines whether teaching has ended. If teaching has ended (Yes in S24), the teaching is ended. At the end of teaching, the taught route plan file is set as the route plan file 22. If teaching has not ended (No in S24), the process returns to step S21 to continue teaching.

Step S25: Since the route plan deviates from the allowable movement range and the self-traveling transport device 1 is in danger of toppling over, the robot arm controller 13 stops the movement of the robot arm 4. The servo of the robot arm 4 is turned off, or a warning is issued to the operator by the notifier 15. After resetting the warning, the operator reviews the current route plan, returns to step S21, and performs teaching again.

For example, in the above example, if it is found that the posture and movement of the robot arm 4 exceed the allowable movement range at a stage illustrated in FIG. 6, in the posture illustrated in FIG. 6, the arm movement monitoring part 14 gives a stop instruction to the robot arm controller 13 and the robot arm 4 is stopped. Hence, the teaching is not completed until the target posture illustrated in FIG. 5 is reached. In order to complete the teaching, it is effective to take measures such as changing the posture illustrated in FIG. 5, or slowing down a movement speed and reducing kinetic energy.

### (Execution Mode)

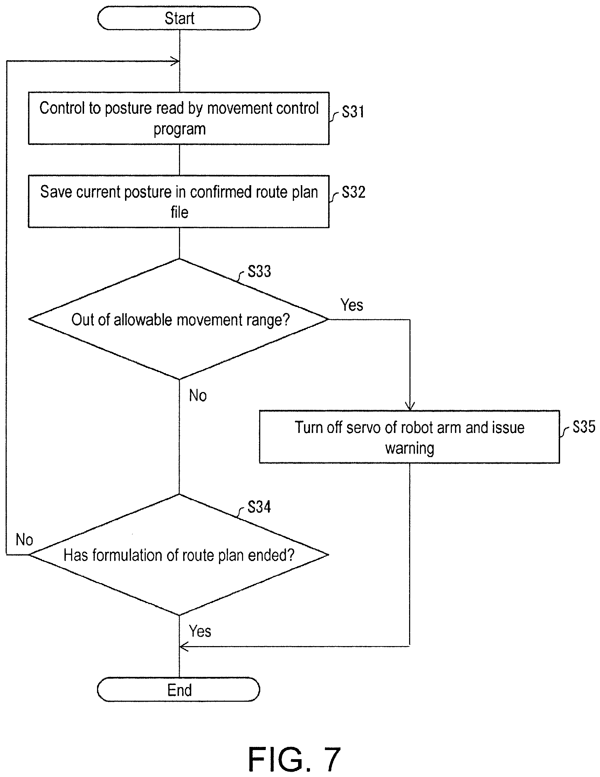

Next, the execution mode is described. FIG. 7 is a flowchart illustrating an operation in the execution mode of the self-traveling transport device 1 according to Embodiment 1.

Step S31 : The robot arm controller 13 controls the robot arm 4 to a posture read by the movement control program 23. Several postures are defined in the movement control program 23, and if a posture in between is not defined, the robot arm controller 13 performs interpolation at any time.

Step S32: The same processing as in step S22 is performed.

Step S33: The same processing as in step S23 is performed. If the robot arm 4 does not deviate from the allowable movement range (No in S33), the process proceeds to step S34. If the robot arm 4 deviates from the allowable movement range (Yes in S33), the process proceeds to step S35.

Step S34: It is determined whether formulation of a route plan has ended with reference to the movement control program 23. If formulation of the route plan has ended (Yes in S34), the formulation of the route plan is ended. At the end of formulation of the route plan, the confirmed route plan file is set as the route plan file 22. If formulation of the route plan has not ended (No in S34), the process returns to step S31 to continue formulation of the route plan.

Step S35: The same processing as in step S25 is performed.

### §4 Action and Effects

In a conventional self-traveling transport device, there has been a demand for a relatively heavy robot arm to be mounted on a traveling robot in order to relax the limitations on weight capacity or work content. If the base area of the traveling robot is increased, the area efficiency or work efficiency of the factory, warehouse or the like is decreased. Thus, it is desirable that the base area of the traveling robot be as small as possible. Hence, in order to relax the limitations on weight capacity or work content while keeping the traveling robot small, a means of limiting a movement of the robot arm and preventing toppling over has become necessary.

Accordingly, in the present embodiment, the movement range being a range of postures and movements that can be taken by the robot arm 4 is defined by a simulator in advance. During formulation of a route plan, the allowable movement range is defined that has taken into account the safety factor with respect to the movement range. During formulation of a route plan, in order for the robot arm 4 to perform a movement under limitations so that the movement can be performed only within the allowable movement range, the route plan can be formulated so that the movement can be performed only within the allowable movement range. Thus, the limitations on weight capacity or work content can be relaxed without excessively increasing the base area of the traveling robot 3.

### [Modifications]

In step S12 in Embodiment 1, teaching of a posture of the robot arm 4 is performed. However, the present invention is not limited thereto. For example, the self-traveling transport device 1 may include a means of grasping space, such as a light detection and ranging (LIDAR) device or a stereo camera. A target posture (corresponding to the posture illustrated in FIG. 4 in the example of Embodiment 1) of the robot arm 4 may be determined spontaneously and a route may be planned.

In this case, since the route plan can be determined without the operator who determines whether there is a danger of topping over in the conventional self-traveling transport device 1, the necessity of the allowable movement range is higher than in the case of Embodiment 1 in order to prevent toppling over.

### [Embodiment 2]

Another embodiment of the present invention is described below. For convenience of description, members having the same functions as those described in the above embodiment are denoted by the same reference numerals, and descriptions thereof are not repeated.

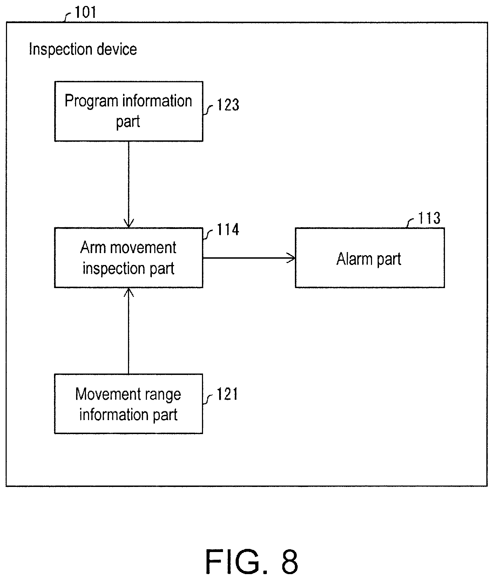

FIG. 8 is a block diagram illustrating a configuration of a main part of an inspection device 101 according to Embodiment 2. The inspection device 101 is a device that reads a movement control program of the self-traveling transport device 1 programmed by the operator and determines whether a movement can be performed without toppling over. The inspection device 101 includes an arm movement inspection part 114, an alarm part 115, a movement range information part 121 and a program information part 123.

The inspection device 101 may be configured by a computer including a central processing unit (CPU) and a readable recording medium storing an inspection program. A function of the inspection device 101 including each of the functional blocks is realized by the CPU reading the inspection program from the recording medium and executing the inspection program. By providing a similar computer in the self-traveling transport device 1, the function of the inspection device 101 may be realized on the self-traveling transport device 1.

The movement range information part 121 holds the content of a movement range file for the self-traveling transport device 1 generated by a flow illustrated in the flowchart of FIG. 3.

The program information part 123 reads and holds the movement control program of the self-traveling transport device 1 programmed by the operator. The program information part 123 has a virtual model of the self-traveling transport device 1 and operates the virtual model based on the read movement control program 23. Then, the program information part 123 outputs a movement result of the virtual model to the arm movement inspection part 114.

Based on the input movement result of the virtual model and movement range information held by the movement range information part 121, similarly to the case of Embodiment 1, the arm movement inspection part 114 determines whether a robot arm of the virtual model deviates from the allowable movement range. If the movement result of the virtual model according to the movement control program of the self-traveling transport device 1 programmed by the operator has deviated from the allowable movement range, the alarm part 115 is notified that the movement has deviated from the allowable movement range.

In the case where a notification is received from the arm movement inspection part 114 that the movement has deviated from the allowable movement range, the alarm part 115 issues a warning.

By using the inspection device 101, it can be confirmed without actually operating the self-traveling transport device 1 that the self-traveling transport device 1 does not topple over. Hence, while a danger to the operator due to malfunction of the movement control program or the like by any possibility can be avoided, the possibility of the self-traveling transport device 1 being damaged can be eliminated. The movement control program 23 inspected by the arm movement inspection part 114 may be saved as the route plan file 22.

Furthermore, in the inspection device 101, even if the robot arm of the virtual model has deviated from the movement range information, the corresponding movement control program may be modified and a new route plan that does not deviate from the movement range information may be generated in the arm movement inspection part 114. For example, in the case where the posture of the robot arm in the virtual model is in a position where the center of gravity does not fall over, and toppling over occurs due to a high movement speed and high kinetic energy, modification may be made so that the movement speed is automatically decreased so as to fall within the movement range information.

### [Implementation Example by Software]

A control block (particularly the movement controller 11, the traveling robot controller 12, the robot arm controller 13, the arm movement monitoring part 14, and the notifier 15) of the self-traveling transport device 1 may be implemented by a logic circuit (hardware) formed in an integrated circuit (IC chip) or the like, or may be implemented by software.

In the latter case, the self-traveling transport device 1 includes a computer executing commands of a program being software that realizes each function. This computer includes, for example, one or more processors, and includes a computer-readable recording medium storing the program. In the computer, an object of the present invention is achieved by the processor reading the program from the recording medium and executing the program. As the processor, a central processing unit (CPU), for example, can be used. As the recording medium, a "non-transitory tangible medium," for example, in addition to a read only memory (ROM), a tape, a disk, a card, a semiconductor memory, a programmable logic circuit or the like, can be used. A random access memory (RAM) or the like for developing the program may further be provided. The program may be supplied to the computer via an arbitrary transmission medium (such as a communication network or broadcast waves) capable of transmitting the program. One aspect of the present invention may be realized in the form of a data signal embedded in a carrier wave, the data signal being embodied by the program by electronic transmission.

### [Conclusion]

In order to solve the above problems, a self-traveling transport device according to one aspect of the present invention is a self-traveling transport device including: a traveling robot; a robot arm, mounted on the traveling robot; a robot arm controller, controlling the robot arm; an arm movement monitoring part, monitoring a movement of the robot arm; and a storage part, storing a movement range file. The movement range file is a file in which is registered a movement range of the robot arm in which the self-traveling transport device is capable of standing. During formulation of a route plan for the robot arm, in the case where the movement of the robot arm is about to deviate from an allowable movement range, the arm movement monitoring part notifies the robot arm controller and causes the robot arm controller to control the movement of the robot arm to stop, in which the allowable movement range is defined based on the movement range of the robot arm which is registered in the movement range file and in which the self-traveling transport device is capable of standing.

According to the above configuration, in the case where the route plan for the robot arm deviates from the allowable movement range of the robot arm, the robot arm can be stopped. Hence, the center of gravity of the robot arm does not enter an unstable region, and the self-traveling transport device can be prevented from toppling over.

In the self-traveling transport device according to the above aspect, a notifier may further be provided that issues a warning according to a notification from the arm movement monitoring part in the case where deviation from the allowable movement range is about to occur.

According to the above configuration, in the case where the route plan for the robot arm deviates from the allowable movement range, the warning can be issued. Hence, the operator is able to know that the route plan for the robot arm has deviated from the allowable movement range, and another route plan can be formulated that does not render the self-traveling transport device unstable.

In the self-traveling transport device according to the above aspect, the formulation of the route plan for the robot arm may be performed by teaching in which a human directly moves the robot arm.

According to the above configuration, the operator (human) may directly operate the robot arm and perform teaching when formulating the route plan for the robot arm. Hence, in the case where the robot arm deviates from the allowable movement range, a response such as to prevent the robot arm from performing the movement can be changed.

In the self-traveling transport device according to the above aspect, the formulation of the route plan for the robot arm may be performed by a robot arm control program to be executed by the robot arm controller.

A control method for a self-traveling transport device according to another aspect is a control method for a self-traveling transport device including a traveling robot and a robot arm mounted on the traveling robot. In the control method, during formulation of a route plan for the robot arm, in the case where a movement of the robot arm is about to deviate from an allowable movement range, the movement of the robot arm is controlled to stop, in which the allowable movement range is defined based on a pre-calculated movement range of the robot arm in which the self-traveling transport device is capable of standing.

A self-traveling transport device according to each aspect of the present invention may be realized by a computer. In this case, a robot arm control program, an arm movement monitoring program and a notification program of the self-traveling transport device, which realize the self-traveling transport device on the computer by causing the computer to operate as each part (software element) included in the self-traveling transport device, as well as a computer-readable recording medium storing the programs, also fall within the scope of the present invention.

### [Additional Notes]

The present invention is not limited to each embodiment described above, and may be modified in various ways within the scope of the claims. An embodiment derived from a proper combination of technical means disclosed in respective different embodiments is also encompassed in the technical scope of the present invention.

### Description of Reference Numerals

1: self-traveling transport device
3: traveling robot
4: robot arm
5: cart
10: control part
11: movement controller
12: traveling robot controller
13: robot arm controller
14: arm movement monitoring part
15: notifier
20: storage part
21: movement range file
22: route plan file
23: movement control program
30: input/output part
101: inspection device
114: arm movement inspection part
115: alarm part
121: movement range information part
123: program information part

## Claims

1. A self-traveling transport device, comprising:
a traveling robot;
a robot arm, mounted on the traveling robot;
a robot arm controller, controlling the robot arm;
an arm movement monitoring part, monitoring a movement of the robot arm; and
a storage part, storing a movement range file, wherein
the movement range file is a file in which is registered a movement range of the robot arm in which the self-traveling transport device is capable of standing; and
during formulation of a route plan for the robot arm, in response to the movement of the robot arm being about to deviate from an allowable movement range, the arm movement monitoring part notifies the robot arm controller and causes the robot arm controller to control the movement of the robot arm to stop, wherein the allowable movement range is defined based on the movement range of the robot arm which is registered in the movement range file and in which the self-traveling transport device is capable of standing.

2. The self-traveling transport device according to claim 1, further comprising a notifier that issues a warning according to a notification from the arm movement monitoring part in response to deviation from the allowable movement range being about to occur.

3. The self-traveling transport device according to claim 1 or 2, wherein the formulation of the route plan is implemented by teaching in which a human directly moves the robot arm.

4. The self-traveling transport device according to claim 1 or 2, wherein the formulation of the route plan is implemented by execution of a robot arm control program that causes the robot arm controller to control the robot arm.

5. A control method for a self-traveling transport device, the self-traveling transport device comprising a traveling robot and a robot arm mounted on the traveling robot, wherein the control method for the self-traveling transport device comprises:
during formulation of a route plan for the robot arm, in response to a movement of the robot arm being about to deviate from an allowable movement range, controlling the movement of the robot arm to stop, wherein the allowable movement range is defined based on a pre-calculated movement range of the robot arm in which the self-traveling transport device is capable of standing.

6. An inspection program for inspecting a control program that directs an operation of a self-traveling transport device, the self-traveling transport device comprising a traveling robot and a robot arm mounted on the traveling robot, wherein the inspection program causes a computer to function as:
a movement range information part in which is registered a movement range of the robot arm in which the self-traveling transport device is capable of standing;
an arm movement inspection part, determining whether a movement of the robot arm executed in accordance with the control program deviates from an allowable movement range, the allowable movement range being defined based on the movement range of the robot arm which is registered in the movement range information part and in which the self-traveling transport device is capable of standing; and
an alarm part, issuing a warning in response to the arm movement inspection part determining that deviation from the allowable movement range occurs.
